# EUROPÄISCHE PATENTANMELDUNG

(11) **EP 2 787 276 A1**
(43) Veröffentlichungstag der Anmeldung: **08.10.2014**
(21) Anmeldenummer: 13162527.9
(22) Anmeldetag: 05.04.2013
(51) Int. Cl.: F21V 8/00, B60Q 1/00

(54) **Lichtleiteranordnung mit zwei Lichtleiterelementen**

(71) Anmelder: Flextronics Automotive GmbH & Co. KG, 72636 Frickenhausen (DE)
(72) Erfinder: Wimbert, Dr. Frank, 73277 Owen (DE)
(74) Vertreter: Kohler Schmid Möbus

(57) **Zusammenfassung**

Eine Lichtleiteranordnung (1) mit einem Lichtleiter (2) und mindestens einer Lichtquelle (4), wobei der Lichtleiter (2) eine Lichteinkoppelstelle (3) zum Einkoppeln von Licht aus der Lichtquelle (4) in den Lichtleiter (2) entlang einer Ausbreitungsrichtung (5) aufweist, ist dadurch gekennzeichnet, dass der Lichtleiter (2) ein erstes Lichtleiterelement (7) und ein zweites Lichtleiterelement (8) umfasst, welche flächig miteinander verbunden sind, wobei das erste Lichtleiterelement (7) aus einem Material mit einer ersten Streupartikeldichte und das zweite Lichtleiterelement (8) aus einem Material mit einer zweiten Streupartikeldichte gefertigt sind, wobei die zweite Streupartikeldichte kleiner als die erste Streupartikeldichte ist, und wobei die Geometrien der Lichtleiterelemente (7, 8) so gewählt sind, dass sich die Anzahl der Streupartikel entlang der Ausbreitungsrichtung (5) verändert. Auf diese Weise kann eine vorgegebene Lichtverteilung mit einseitiger Beleuchtung realisiert werden.

## Beschreibung

Die vorliegende Erfindung betrifft eine Lichtleiteranordnung mit einem Lichtleiter und mindestens einer Lichtquelle, wobei der Lichtleiter eine Lichteinkoppelstelle zum Einkoppeln von Licht aus der Lichtquelle in den Lichtleiter entlang einer Ausbreitungsrichtung aufweist

### Hintergrund der Erfindung

Bei Beleuchtungseinrichtungen für Fahrzeuge werden häufig Lichtleiter eingesetzt, bspw. als Blinkleuchten, Bremsleuchten oder als Tagfahr- oder Standlicht.

Die Auskopplung des Lichts aus dem Lichtleiter kann über optische Strukturen erfolgen, was jedoch sehr aufwändig in der Herstellung ist.

Eine andere Möglichkeit der Lichtauskopplung besteht darin, ein Lichtleitermaterial zu wählen, das eine hohe Dichte an Streupartikein aufweist (diffus streuende Materialien). Durch die Verwendung von streuenden Lichtleitermaterialien kann auf zusätzliche optische Strukturen zur Auskopplung verzichtet werden. Die Auskopplung des Lichts durch streuende Materialien erfolgt entlang der Ausbreitungsrichtung des Lichts im Lichtleiter kontinuierlich, was dazu führt, dass die Lichtmenge und somit auch die Leuchtdichte über die Länge des Lichtleiters abnehmen. Je effizienter das Licht ausgekoppelt wird (also je höher die Streupartikeldichte), desto stärker ist dieser Effekt. Längere Lichtleiter müssen daher immer von zwei Seiten aus beleuchtet werden, um ein homogenes Lichtbild zu erhalten, was jedoch konstruktiv oftmals Schwierigkeiten bereitet.

### Aufgabe der Erfindung

Es ist daher Aufgabe der vorliegenden Erfindung, eine Lichtleiteranordnung bereitzustellen, bei der eine vorgegebene Lichtverteilung mit einseitiger Beleuchtung realisiert werden kann.

### Kurze Beschreibung der Erfindung

Diese Aufgabe wird erfindungsgemäß durch die Merkmale des Patentanspruchs 1 gelöst. Vorteilhafte Ausgestaltungen der Erfindung sind Gegenstand der Unteransprüche.

Erfindungsgemäß umfasst der Lichtleiter ein erstes Lichtleiterelement und ein zweites Lichtleiterelement, welche flächig miteinander verbunden sind, wobei das erste Lichtleiterelement aus einem Material mit einer ersten Streupartikeldichte und das zweite Lichtleiterelement aus einem Material mit einer zweiten Streupartikeldichte gefertigt ist, wobei die zweite Streupartikeldichte kleiner als die erste Streupartikeldichte ist, und wobei die Geometrien der Lichtleiterelemente so gewählt sind, dass sich die Anzahl der entlang der Ausbreitungsrichtung verändert.

Die Anzahl der Streupartikel pro Volumenelement des Lichtleiters, welches eine Querschnittsfläche des Lichtleiters als Grundfläche aufweist, ist also nicht konstant. Bei einem Lichtleiter mit konstantem Querschnitt ändert sich also die Streupartikeldichte. Die Querschnittsfläche beschreibt einen Schnitt senkrecht zur Ausbreitungsrichtung des Lichts innerhalb des Lichtleiters, wobei die Ausbreitungsrichtung die Richtung beschreibt, entlang der das Licht durch den Lichtleiter geleitet wird. Die Ausbreitungsrichtung entspricht also dem Verlauf des Lichtleiters zwischen der Lichteinkoppelstelle und einem der Lichteinkoppelstelle gegenüberliegendem anderen Ende des Lichtleiters. Im Falle eines gekrümmten Lichtleiters ändert sich also die Ausbreitungsrichtung entlang des Lichtleiters.

Durch die Veränderung der Anzahl der Streupartikel pro Volumenelement kann die Menge des durch Streuung ausgekoppelten Lichts entlang der Ausbreitungsrichtung beeinflusst werden. Je größer die Anzahl der Streupartikel innerhalb eines Volumenelements ist, desto höher ist der Anteil des gestreuten Lichts. Die resultierende Lichtverteilung wird beeinflusst von den Partikeldichteverteilungen der Materialien der Lichtleiterelemente, der Querschnittsfläche des Lichtleiters und dem Verhältnis der Querschnittsflächen der Lichtleiterelemente.

Erfindungsgemäß wird die Änderung der Anzahl der Streupartikel in einem Volumenelement durch geeignete Wahl der Geometrien der Lichtleiterelemente erzielt.

### Bevorzugte Ausführungsformen

Bei einer bevorzugten Ausführungsform der erfindungsgemäßen Lichtleiteranordnung verändert sich entlang der Ausbreitungsrichtung der Flächeninhalt der Querschnittsfläche des ersten Lichtleiterelements. Die Variation der Anzahl der Streupartikel entlang der Ausbreitungsrichtung wird also durch Variation des Querschnitts des ersten Lichtleiterelements realisiert. Sofern die Streupartikeldichte des zweiten Lichtleiterelements ungleich Null ist, kann die Variation der Anzahl der Streupartikel auch durch Variation des Querschnitts des zweiten Lichtleiterelements erfolgen. Da die Streupartikeldichte des zweiten Lichtleiterelements jedoch geringer ist als die des ersten Lichtleiterelements, ist der Effekt auf die Änderung der Leuchtdichte entsprechend geringer.

Vorzugsweise verändert sich die Querschnittsfläche des ersten Lichtleiterelements kontinuierlich. Der Anteil des stärker lichtstreuenden Materials wird dadurch gegenüber dem Anteil des geringer lichtstreuenden Materials kontinuierlich erhöht oder verringert.

Bei einer besonders bevorzugten Ausführungsform nimmt die Querschnittsfläche des ersten Lichtleiterelements von der Lichteinkoppelstelle bis zum gegenüberliegenden Ende des Lichtleiters zu. Bei einem aus dem Stand der Technik bekannten Lichtleiter mit einheitlicher Streupartikeldichte und gleichbleibender Querschnittsfläche hingegen würde stets der gleiche Anteil des im Lichtleiter geführten Lichts ausgekoppelt werden, was dazu führt, dass aufgrund der durch die Auskopplung abnehmende Lichtmenge innerhalb des Lichtleiters, die Leuchtdichte mit zunehmenden Abstand zur Lichteinkoppelstelle abnimmt. Erfindungsgemäß sind nun in der Nähe der Lichteinkoppelstelle weniger Streupartikel (aufgrund der kleineren Querschnittsfläche des ersten Lichtleiterelements) vorgesehen als am gegenüberliegenden Ende des Lichtleiters. Dementsprechend wird mit zunehmender Entfernung von der Lichtquelle ein größerer Anteil des im Lichtleiter geführten Lichts ausgekoppelt, so dass insgesamt eine homogenere Lichtverteilung erreicht werden kann.

Bei einer besonders bevorzugten Ausführungsform der erfindungsgemäßen Lichtleiteranordnung werden die Geometrien des ersten und des zweiten Lichtleiterelements so gewählt, dass die Lichtverteilung des ausgekoppelten Lichts homogen ist. Die durch Streuung verursachte Reduzierung der Lichtmenge innerhalb des Lichtleiters wird also durch die Erhöhung von Material mit höherer Streupartikeldichte ausgeglichen. Auf eine Einkopplung von Licht auf der gegenüberliegenden Seite des Lichtleiters kann somit verzichtet werden. Die Geometrie der Lichtleiterelemente richtet sich nach den Streupartikeidichten der beiden Lichtleiterelemente und der gewünschten Geometrie des Lichtleiters. Unter "homogen" soll eine Lichtverteilung angesehen werden, bei der die Helligkeitsunterschiede von hellstem zu dunkelstern Flächenelement maximal 30 % der größten Helligkeit betragen.

Vorzugsweise ändert sich die Querschnittsfläche linear, exponentiell oder polynomial mit der Länge des Lichtleiters. Lichtleiterelemente, bei denen sich der Querschnitt linear ändert, sind besonders einfach herzustellen. Mit Hilfe von Lichtleiterelementen mit exponentieller Änderung des Querschnitts können jedoch bessere Ergebnisse bzgl. der Homogenität erzielt werden.

Eine spezielle Ausführungsform der erfindungsgemäßen Lichtleiteranordnung sieht vor, dass das zweite Lichtleiterelement zusätzliche Strukturen zur punktuellen Auskopplung von Licht aufweist. Auf diese Weise können einerseits Lichtakzente in Form von Lichtpunkten gesetzt werden und gleichzeitig eine homogene Hintergrundbeleuchtung realisiert werden.

Da aufgrund der zusätzlichen Strukturen punktuell eine größere Lichtmenge ausgekoppelt wird, ist es vorteilhaft, wenn das erste Lichtleiterelement entlang der Ausbreitungsrichtung Stufen aufweist, um (in Ausbreitungsrichtung) nach den zusätzliche Strukturen eine entsprechende höhere Streuung zu bewirken und so die Homogenität des durch die Streupartikel ausgekoppelten "Hintergrundlichts" zu optimieren. Das Ende der Stufen fällt bzgl. der Ausbreitungsrichtung mit der Stelle der zusätzlichen Strukturen zusammen.

Vorzugsweise sind die Stufen an der Kontaktfläche ausgebildet. In diesem Fall sind entsprechende Stufen auch am zweiten Lichtleiterelement ausgebildet.

Bei einer bevorzugten Ausführungsform entspricht die Ausbreitungsrichtung der länglichen Ausdehnung des Lichtleiters. Die Einkopplung des Lichts erfolgt dann an einem der kurzen Enden des Lichtleiters. Alternativ dazu kann die längliche Ausdehnung des Lichtleiters auch senkrecht zur Ausbreitungsrichtung verlaufen (flächiger Lichtleiter). In diesem Fall erfolgt die Einkopplung des Lichts vorzugsweise über mehrere Lichtquellen, die entlang eines langen Endes (Seitenkante) des Lichtleiters angeordnet sind.

Bei einer besonders bevorzugten Ausführungsform ist der Lichtleiter stabförmig und weist einen konstanten Querschnitt auf. Die Form des Querschnitts kann beliebig sein, z.B. rund, oval, eckig, unregelmäßig, ringförmig, etc. Aufgrund des konstanten Querschnitts des Lichtleiters gilt: Je größer der Anteil der Querschnittsfläche des stärker streuenden Materials am Gesamtquerschnitt des Lichtleiters desto höher ist der Anteil des gestreuten Lichts.

Vorzugsweise ist als Lichtquelle mindestens eine LED vorgesehen.

Das erste Lichtleiterelement und/oder das zweite Lichtleiterelement aus können aus Polymethylmethacrylate (PMMA) gefertigt sein, wobei das erste Lichtleiterelement glasklar ausgestaltet ist und das zweite Lichtleiterelement mit Diffuserpartikeln versehen ist, welche die Ausbreitungsrichtung der in die Platte eintretenden Lichtstrahlen durch Lichtbrechung und Lichtbeugung derart verändern, dass der Winkel für die Totalreflexion an der Oberfläche des Lichtleiters unterschritten wird und ein Lichtaustritt erfolgt (z.B. Plexiglas EndLighten^{®} von Evonik).

Vorzugsweise ist der Lichtleiter mittels eines Mehrkomponenten-Spritzguss-Verfahrens gefertigt. Auf diese Weise können die Lichtleiterelemente in einem einzigen Fertigungsschritt hergestellt und miteinander verbunden werden. Alternativ hierzu ist es auch möglich, die beiden Lichtleiterelemente separat herzustellen und mittels eines optischen Klebers zu verbinden, wobei der Kleber vorzugsweise eine geringe Streupartikeldichte und einen ähnlichen Brechungsindex wie die Lichtleiterelemente aufweist.

Bei einer speziellen Ausführungsform ist das zweite Lichtleiterelement aus einem glasklaren Material gefertigt. Die Streuung des Lichts im Lichtleiter erfolgt dann nahezu ausschließlich über das erste Lichtleiterelement.

Die erfindungsgemäße Lichtleiteranordnung kann vorteilhaft im Automotive-Bereich eingesetzt werden, insbesondere als Leuchtvorrichtung für Ambientebeleuchtung, Blink-, Rückleuchten, Tagfahrlicht oder Standlicht.

Mit der erfindungsgemäßen Lichtleiteranordnung kann erreicht werden, dass in seitlicher Draufsicht (quer zur Ausbreitungsrichtung) der Lichtleiter homogen leuchtet, und das Hauptlicht zur Erfüllung der Lichtfunktion (z.B. Spiegelblinker) in Ausbreitungsrichtung aus dem Lichtleiter austritt.

Für Spiegelblinker kommt eine Ausführungsform der erfindungsgemäßen Lichtleiteranordnung in Frage, bei der der Lichtleiter gekrümmt ist.

Besonders vorteilhaft ist eine Weiterbildung dieser Ausführungsform, bei der die Änderung des Flächeninhalts der Querschnittsfläche des ersten Lichtleiterelements abhängig von der Krümmung und/oder der Krümmungsänderung des Lichtleiters ist. Auf diese Weise können durch die Krümmung des Lichtleiters bedingte Auskoppeleffekte kompensiert werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erfindungsgemäße Lichtleiteranordnung mit einem ersten und einem zweiten Lichtleiterelement unterschiedlicher Streupartikeldichte sowie die Abhängigkeit der Leuchtdichte des ausgekoppelten Lichts vom Abstand der Auskoppelstelle zur Lichteinkoppelstelle;
- Fig. 2: eine Lichtleiteranordnung gemäß dem Stand der Technik mit einem Lichtleiter mit einheitlicher Streupartikeldichte sowie die Abhängigkeit der Leuchtdichte des ausgekoppelten Lichts vom Abstand der Auskoppelstelle zur Lichteinkoppelstelle;
- Fig. 3: eine erfindungsgemäße Lichtleiteranordnung mit optischen Strukturen zur punktuellen Auskopplung von Licht; und
- Fig. 4: eine erfindungsgemäße Lichtleiteranordnung mit gekrümmtem Lichtleiter.

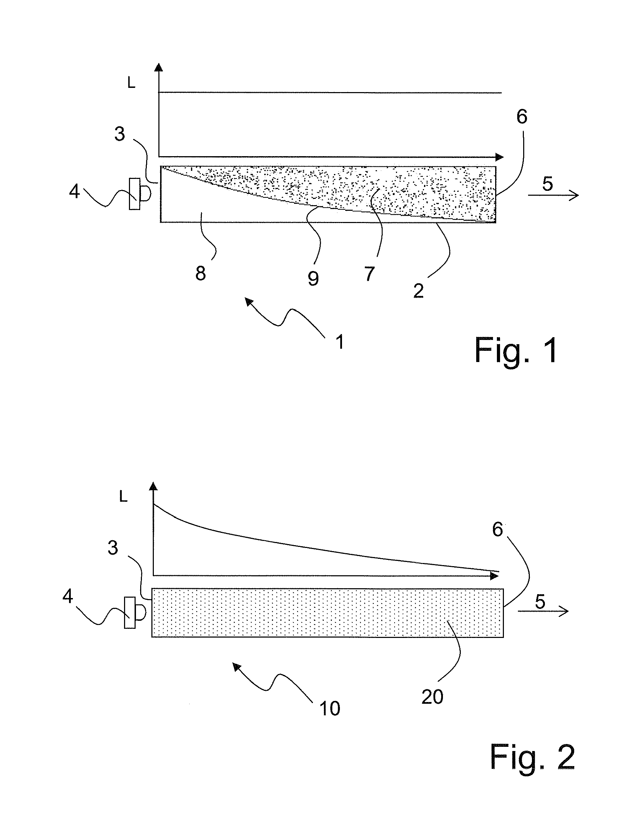

**Fig.1 und 2** zeigen Lichtleiteranordnungen **1, 10** mit jeweils einem Lichtleiter **2, 20.** Im gezeigten Beispiel ist der Lichtleiter 2, 20 länglich mit einem konstanten Querschnitt ausgebildet. Über eine Lichteinkoppelstelle **3** wird Licht einer Lichtquelle **4** in den Lichtleiter 2 eingekoppelt. Innerhalb des Lichtleiters 2,20 wird das Licht entlang einer Ausbreitungsrichtung **5** mittels Totalreflexion geleitet. Aufgrund von Streupartikeln innerhalb des Lichtleiters 2, 20 wird ein Teil des Lichts gestreut und aus dem Lichtleiter 3 ausgekoppelt, bevor das Licht das der Lichteinkoppelstelle 3 gegenüberliegende Ende **6** des Lichtleiters 3 erreicht.

Die in Fig. 2 gezeigte Lichtleiteranordnung 10 entspricht dem Stand der Technik. Der Lichtleiter 20 besteht aus einem einheitlichen Material mit im Rahmen der Produktionsgenauigkeit konstanter Streupartikeldichte. Das eingekoppelte Licht wird kontinuierlich ausgekoppelt, wobei die Lichtmenge und somit auch die Leuchtdichte über der Länge des Lichtleiters 20 abnehmen, wie im Streudichte-Abstands-Diagramm in Fig. 2 dargestellt.

Fig. 1 zeigt eine besonders bevorzugte Ausführungsform der erfindungsgemäßen Lichtleiteranordnung. Der Lichtleiter 2 umfasst eine erstes Lichtleiterelement **7** und ein zweites Lichtleiterelement **8**, welche über eine ihrer Außenflächen (Kontaktfläche **9)** flächig miteinander verbunden sind. Die Verbindung zwischen den beiden Lichtleiterelementen 7, 8 sollte so gestaltet sein, dass das im Lichtleiter 2 geführte Licht im Wesentlichen ungestört vom zweiten Lichtleiterelement 8 in das erste Lichtleiterelement 7 eintreten kann. Die Lichtleiterelemente 7, 8 unterscheiden sich in ihrer Streupartikeldichte, wobei das erste Lichtleiterelement eine größere Streupartikeldichte aufweist als das zweite Lichtleiterelement 8. Die beiden Lichtleiterelemente 7, 8 sind im gezeigten Beispiel mit gekrümmter Fläche ausgebildet, wobei der Querschnitt des ersten Lichtleiterelements 7 mit größer werdender Entfernung von der Lichteinkoppelstelle 3 kontinuierlich zunimmt. Dadurch wird in der Nähe der Lichteinkoppelstelle 3 nur ein kleinerer Anteil der dort im Lichtleiter 2 geführten Lichtmenge gestreut und somit ausgekoppelt, während in der Nähe des der Lichteinkoppelstelle 3 gegenüberliegenden Endes 6 des Lichtleiters 2 ein größerer Anteil der dort im Lichtleiter 2 geführten (aufgrund der bereits erfolgten Auskopplung reduzierten) Lichtmenge gestreut und somit ausgekoppelt wird. Bei geeigneter Wahl der Form und der Streupartikeldichten der Lichtleiterelemente kann somit eine konstante Leuchtdichte über die Länge des Lichtleiters 2 erreicht werden, wie im Streudichte-Abstands-Diagramm von Fig. 1 dargestellt.

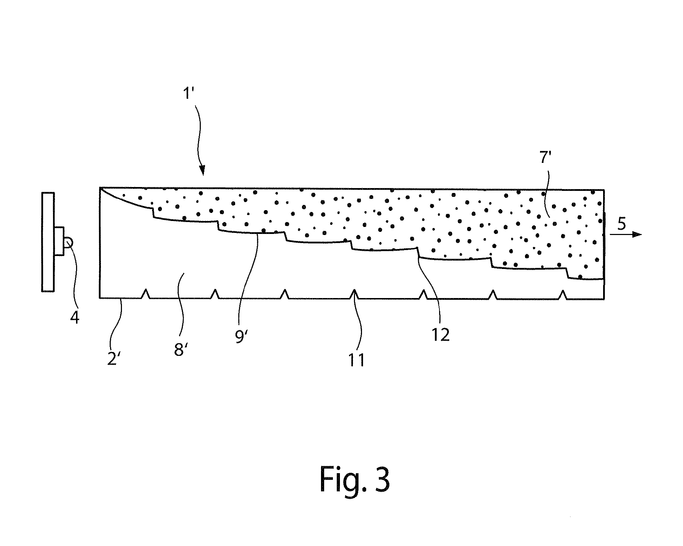

**Fig. 3** zeigt eine spezielle Ausführungsform der erfindungsgemäßen Lichtleiteranordnung 1' mit einem aus einem ersten Lichtleiterelement **7'** und einem zweiten Lichtleiterelement **8'** bestehenden Lichtleiter **2',** der mit optischen Strukturen **11** versehen ist. Die optischen Strukturen 11 sind in Form von Einkerbungen an der Außenseite des zweiten Lichtleiterelements 8' angebracht und bewirken eine zusätzliche punktuelle Auskopplung von Licht aus dem Lichtleiter 2'. Da sich die Lichtmenge im Lichtleiter durch die optischen Strukturen sprunghaft ändert, sind an der den optischen Strukturen 11 gegenüberliegenden Kontaktfläche **9'** Stufen **12** an den Lichtleiterelementen 7', 8' ausgebildet, die eine sprunghafte Änderung der Streupartikelanzahl im Querschnitt des Lichtleiters 2' bewirken. Das Anteilsverhältnis des ersten Lichtleiterelements 7' zum zweiten Lichtleiterelement 8' zeigt also im Querschnitt des Lichtleiters 2' Unstetigkeitsstellen, und zwar bezüglich der Ausbreitungsrichtung 5 an denjenigen Stellen, an denen die optischen Strukturen 11 vorgesehen sind. Auf diese Weise kann sichergestellt werden, dass die durch die Streupartikel des ersten Lichtleiterelements 7' ausgekoppelte Lichtmenge entlang der Ausbreitungsrichtung 5 konstant bleibt. Somit kann eine besonders homogene Lichtverteilung (Hintergrundbeleuchtung) mit vereinzelten Lichtakzenten realisiert werden. Die optischen Strukturen 11 können insbesondere dazu eingesetzt werden, genügend Licht zur Erfüllung einer Lichtfunktion (z.B. für eine Leuchte im Automotivbereich) senkrecht zur Ausbreitungsrichtung 5 auszukoppeln.

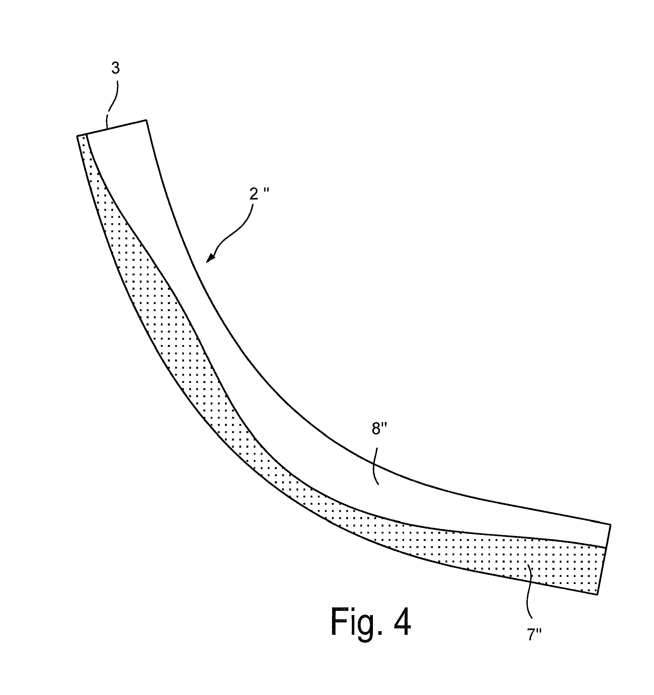

Fig. 4 zeigt eine erfindungsgemäße Lichtleiteranordnung mit einem ein erstes Lichtleiterelement 7" und ein zweites Lichtleiterelement 8" umfassenden gekrümmten Lichtleiter 2". Durch die Richtungsänderungen des Lichtleiters 2" (und somit auch der Ausbreitungsrichtung) bedingt, kann es sein, dass an manchen Stellen mehr, an anderen Stellen weniger Licht in Beobachtungsrichtung (quer zur Ausbreitungsrichtung) ausgekoppelt wird. Insbesondere bewirkt eine stärkere Krümmung des Lichtleiters 2" eine vermehrte Auskopplung des im Lichtleiter 2' geführten Lichts. Dies kann über eine Variation der Partikeldichte kompensiert werden, indem die Querschnitte der Lichtleiterelemente 7", 8' der Krümmung oder Krümmungsänderung angepasst werden, was in fig. 4 schematisch gezeigt ist. Auf diese Weise kann auch bei einem gekrümmten Lichtleiter 2" eine homogene Lichtverteilung erreicht werden.

## Patentansprüche

1. Lichtleiteranordnung (1, 1') mit einem Lichtleiter (2, 2', 2") und mindestens einer Lichtquelle (4), wobei der Lichtleiter (2, 2', 2") eine Lichteinkoppelstelle (3) zum Einkoppeln von Licht aus der Lichtquelle (4) in den Lichtleiter (2, 2', 2") entlang einer Ausbreitungsrichtung (5) aufweist,
**dadurch gekennzeichnet,**
**dass** der Lichtleiter (2, 2', 2") ein erstes Lichtleiterelement (7, 7', 7") und ein zweites Lichtleiterelement (8, 8', 8") umfasst, welche an einer Kontaktfläche (9, 9') flächig miteinander verbunden sind,
wobei das erste Lichtleiterelement (7, 7', 7") aus einem Material mit einer ersten Streupartikeldichte und das zweite Lichtleiterelement (8, 8', 8") aus einem Material mit einer zweiten Streupartikeldichte gefertigt sind, wobei die zweite Streupartikeldichte kleiner als die erste Streupartikeldichte ist, und
wobei die Geometrien der Lichtleiterelemente (7, 8) so gewählt sind, dass sich die Anzahl der Streupartikel im Lichtleiter (2, 2', 2") entlang der Ausbreitungsrichtung (5) verändert.

2. Lichtleiteranordnung (1, 1')) nach Anspruch 1, **dadurch gekennzeichnet, dass** sich entlang der Ausbreitungsrichtung (5) der Flächeninhalt der Querschnittsfläche des ersten Lichtleiterelements (7, 7', 7") verändert.

3. Lichtleiteranordnung (1, 1')) nach Anspruch 2, **dadurch gekennzeichnet, dass** sich der Flächeninhalt der Querschnittsfläche des ersten Lichtleiterelements (7, 7', 7") kontinuierlich verändert.

4. Lichtleiteranordnung (1, 1')) nach einem der Ansprüche 2 oder 3, **dadurch gekennzeichnet, dass** der Flächeninhalt der Querschnittsfläche des ersten Lichtleiterelements (7, 7', 7") von der Lichteinkoppelstelle (3) bis zum gegenüberliegenden Ende (6) des Lichtleiters (2, 2') zunimmt.

5. Lichtleiteranordnung (1, 1')) nach einem der vorhergehenden Ansprüche, **dadurch gekennzeichnet, dass** die Geometrien des ersten und des zweiten Lichtleiterelements (7, 8) so gewählt werden, dass Lichtverteilung des ausgekoppelten Lichts homogen ist.

6. Lichtleiteranordnung (1, 1')) nach einem der Ansprüche 2 bis 5, **dadurch gekennzeichnet, dass** sich der Flächeninhalt der Querschnittsfläche des ersten Lichtleiterelements (7, 7', 7") linear, exponentiell oder polynomial mit der Länge des Lichtleiters (2, 2', 2") ändert.

7. Lichtleiteranordnung (1') nach einem der vorhergehenden Ansprüche, **dadurch gekennzeichnet, dass** das zweite Lichtleitereiement (8') zusätzliche optische Strukturen (11) zur punktuellen Auskopplung von Licht aufweist.

8. Lichtleiteranordnung (1') nach Anspruch 7, **dadurch gekennzeichnet, dass** das erste Lichtleiterelement (7') entlang der Ausbreitungsrichtung (5) Stufen (12) aufweist.

9. Lichtleiteranordnung (1') nach Anspruch 8, **dadurch gekennzeichnet, dass** die Stufen (12) an der Kontaktfläche (9') ausgebildet sind.

10. Lichtleiteranordnung (1, 1')) nach einem der vorhergehenden Ansprüche, **dadurch gekennzeichnet, dass** die Ausbreitungsrichtung (5) der länglichen Ausdehnung des Lichtleiter (2, 2', 2") entspricht.

11. Lichtleiteranordnung (1, 1')) nach einem der vorhergehenden Ansprüche, **dadurch gekennzeichnet, dass** der Lichtleiter (2, 2', 2") stabförmig ist und einen konstanten Querschnitt aufweist.

12. Lichtleiteranordnung (1, 1')) nach einem der vorhergehenden Ansprüche, **dadurch gekennzeichnet, dass** als Lichtquelle (4) mindestens eine LED vorgesehen ist.

13. Lichtleiteranordnung (1) nach einem der vorhergehenden Ansprüche, **dadurch gekennzeichnet, dass** das erste Lichtleiterelement (7, 7', 7") und/oder das zweiten Lichtleiterelement (8, 8', 8") aus Polymethylmethacrylate gefertigt sind.

14. Lichtleiteranordnung (1, 1')) nach einem der vorhergehenden Ansprüche, **dadurch gekennzeichnet, dass** der Lichtleiter (2, 2', 2") mittels eines Mehrkomponenten-Spritzgussverfahrens gefertigt ist.

15. Lichtieiteranordnung (1, 1') nach einem der vorhergehenden Ansprüche, **dadurch gekennzeichnet, dass** die Lichtleiteranordnung (1) Teil einer Leuchtvorrichtung für eine Ambientebeleuchtung, eine Blink-, Rückleuchte, ein Tagfahrlicht oder ein Standlicht für ein Fahrzeug ist.

16. Lichtieiteranordnung (1, 1') nach einem der vorhergehenden Ansprüche, **dadurch gekennzeichnet, dass** der Lichtleiter (2") gekrümmt ist.

17. Lichtleiteranordnung (1, 1') nach Anspruch 16, **dadurch gekennzeichnet, dass** die Änderung des Flächeninhalts der Querschnittsfläche des ersten Lichtleiterelements (7") abhängig von der Krümmung und/oder der Krümmungsänderung des Lichtleiter (2") ist.
